(19) Europäisches Patentamt
European Patent Office
Office européen des brevets

(11) EP 4 072 300 B1

(12) EUROPEAN PATENT SPECIFICATION

(45) Date of publication and mention of the grant of the patent:
**02.08.2023 Bulletin 2023/31**

(21) Application number: **20800169.3**

(22) Date of filing: **05.11.2020**

(51) International Patent Classification (IPC):
***A23D 7/005*** *(2006.01)* ***A23J 1/00*** *(2006.01)*
***A23L 35/00*** *(2016.01)*

(52) Cooperative Patent Classification (CPC):
**A23L 35/10; A23D 7/005; A23J 1/009**

(86) International application number:
**PCT/EP2020/081198**

(87) International publication number:
**WO 2021/115691 (17.06.2021 Gazette 2021/24)**

(54) **DRESSING COMPOSITION COMPRISING MICROALGAL PROTEIN**

VERBANDSZUSAMMENSETZUNG MIT MIKROALGENPROTEIN

COMPOSITION D'ASSAISONNEMENT COMPRENANT DES PROTÉINES DE MICROALGUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2019 EP 19216166**

(43) Date of publication of application:
**19.10.2022 Bulletin 2022/42**

(73) Proprietor: **Unilever IP Holdings B.V.**
**3013 AL Rotterdam (NL)**

(72) Inventors:
- **BOUWENS, Elisabeth Cornelia Maria**
**6708 WH Wageningen (NL)**
- **DRAAISMA, René Bernardus**
**6708 WH Wageningen (NL)**

(74) Representative: **Fijnvandraat, Arnoldus**
**Unilever Patent Group**
**Bronland 14**
**6708 WH Wageningen (NL)**

(56) References cited:
**EP-A1- 0 788 747**
**EP-A1- 2 418 959**
**WO-A1-2017/014806**
**US-A1- 2011 256 282**
**US-B2- 10 299 500**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 072 300 B1

## Description

The present invention relates to a dressing composition, a method preparing said dressing composition, and the use of microalgal protein to provide several aspects to a high-oil emulsified food product.

## Background

Emulsified food compositions comprising a continuous water phase wherein oil droplets are dispersed, such as mayonnaise or some salad dressings comprise water and oil. The oil level in mayonnaise is relatively high, and commonly is more than 65 wt%, and can reach up to 80 wt% of the food composition. The high oil level, in the form of tightly packed droplets in the continuous water phase is responsible for the relatively high texture of mayonnaise. To stabilize such an emulsified food composition, *i.e.* to prevent coalescence of the oil drops which would result in phase separation, an emulsifier is present. For mayonnaise or salad dressing, the emulsifier traditionally comprises egg, in particular, egg yolk. Egg yolk provides a specific taste to the emulsified food product. Egg yolk is known to provide an oil-in-water emulsion that is stable upon storage and provides an attractive, smooth, texture and gloss to the mayonnaise or salad dressings.

Some groups of consumers prefer to avoid eating ingredients of animal origin, including products derived from egg. Consequently, there is a need to provide an emulsified food product with a continuous water phase, in particular a mayonnaise or salad dressing, that does not rely on the use of egg-derived emulsifier, while showing sufficient stability upon storage.

Emulsifiers which are derived from plant proteins are known. Although stable emulsification was established by these emulsifiers, it was observed, however, that when these plant protein emulsifiers are used to stabilize oil-in-water emulsions with a high oil content (more than 65 wt%), the texture of the product gets inhomogeneous. The inhomogeneity can reach the extent as resembling a rough, curdled texture, such as for example observed in cottage cheese. A further problem that was observed with plant protein was that for reasons not understood the viscosity of the emulsified food composition increased significantly upon storage time. These disadvantages are not acceptable for industrially produced dressings and mayonnaises wherein a constant product quality is desired, e.g. resembling as much as possible the appearance and texture of products prepared with egg-derived emulsifier, and wherein long-term storage does not affect the product quality. Further, it was observed that the gloss, as observed on a dressing emulsion wherein egg-derived emulsifier is used, was often not present when plant protein was used as emulsifier.

Accordingly, a need was recognized for a stable, high-oil, oil-in-water emulsified food composition that does not contain egg-derived emulsifier, but which has a homogenous texture and appearance (e.g. not a 'curdled' appearance), which resembles as much as possible the texture and appearance of equivalent emulsions using an egg-derived emulsifier, and which has a stable viscosity upon storage (for at least more than a month, but preferably several months). The composition preferably has a gloss resembling that of a mayonnaise wherein egg-derived emulsifier has been used.

Mayonnaise compositions that are free from egg-derived ingredients are known from EP 0788747.

## Detailed description of the invention.

This problem was surprisingly overcome, at least partly, by a composition and process according to the invention. The invention is defined by the claims.

Accordingly, in a first aspect, the present invention relates to a food composition in the form of an oil-in-water emulsion, comprising:

- From 66 to 87 wt% of vegetable oil, based on the weight of the composition, wherein the composition comprises less than 1 wt% of microalgal oil, based on the weight of the composition,
- Water,
- From 0.01 to 2 wt% of microalgal protein,

wherein the composition has a pH of from 2 to 4.8,
wherein the composition is free from egg-derived ingredients, wherein the composition is free from any one of monoglycerides, ethoxylated monoglyceride, polyoxy-ethylene sorbitans, mono- and diesters of higher fatty acids and glycerin, derived from non-microalgae origin and wherein the composition is free from non-mustard plant protein.

In a second aspect, the invention relates to a process to prepare a composition according to the invention, the process comprising the steps of:

a. Providing a water phase comprising water,

b. Providing an oil phase,
c. Mixing the water phase and the oil phase to provide an oil-in-water emulsion,
d. Adding microalgal protein during step a), b) or c),

to provide oil-in-water emulsion with a pH of from 2 to 4.8.

**Detailed description of the invention**

All percentages, unless otherwise stated, refer to the percentage by weight (wt%).

"Weight ratio" means that the concentration of a first (class of) compound(s) is divided by the concentration of a second (class of) compound(s), and multiplied by 100 in order to arrive at a percentage.

"Microalgae" means phototrophic eukaryotic and prokaryotic microorganism and non-phototrophic mutants thereof.

"Water-soluble" means soluble in water at pH 7 at 20 °C.

"Microalgal oil" means lipid components derived from microalgal cells. This includes both polar and non-polar lipid components.

"Spoonable" means that a composition is semi-solid but not free-flowing on a time scale typical for eating a meal, meaning not free-flowing within a time period of an hour. A sample of such substance is able to be dipped with a spoon from a container containing the composition.

Except in the operating and comparative examples, or where otherwise explicitly indicated, all numbers in this description indicating amounts or ratios of material or conditions of reaction, physical properties of materials and/or use are to be understood as modified by the word "about".

Features described in the context of one aspect of the invention can be applied in another aspect of the invention.

The invention provides a food product as defined in the first aspect above.

Emulsion

The composition of the invention is in the form of an oil-in-water emulsion. Examples of oil-in-water emulsions encompassed by the present invention include emulsified sauces, such as mayonnaise, and dressings, such as salad dressings and vinaigrettes. Preferably, the food composition is an emulsified sauce or dressing, preferably a mayonnaise, a salad dressing or a vinaigrette, and most preferably is a mayonnaise. Generally, a mayonnaise is spoonable, while a salad dressing or a vinaigrette is pourable. A vinaigrette traditionally is a mixture of vegetable oil and a vinegar, and may be a stable oil-in-water emulsion.

In the context of the present invention, the preferred oil-in-water emulsion may be stable as an emulsion during a time period of for example less than one hour (like for example some vinaigrettes). It is preferred that (after emulsifying) the emulsion is stable for more than one hour, preferably during a time period of at least a month, more preferably half a year or more (like for example some mayonnaises).

Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. Also, mayonnaise-like products having oil levels lower than defined in a standard of identity or not containing egg yolk can be considered to be mayonnaises in the context of the present invention. This kind of products may contain thickeners like starch to stabilise the aqueous phase. Mayonnaises may vary in colour, and are generally white, cream-coloured, or pale yellow. The texture may range from light creamy to thick. Generally, mayonnaise is spoonable. In the context of the present invention "mayonnaise" includes such mayonnaise and 'mayonnaise-like' emulsions. Mayonnaises in the context of the present invention do not necessarily need to conform to a standard of identity in any country. In the present invention, vegetable oil is present in an amount of from 66 to 87 wt%.

Oil

It was observed, that in high oil oil-in-water emulsions, the texture of the food composition became rapidly affected and became inhomogenous and viscosity increased over time. The amount of vegetable oil in the present invention is from 66 to 87 wt%, preferably of from 66 to 85 wt%, even more preferably of from 67 to 80 wt%, even more preferably of from 70 to 80 wt%, based on the weight of the composition. But even an amount of 70 to 75 wt% based on the weight of the composition, could be preferred. Any combination of ranges using these mentioned end points are considered to be part of the invention as well.

Preferred oils for use in the context of this invention are vegetable oils which are liquid at 5°C. Preferably the

oil comprises sunflower oil, rapeseed oil, olive oil, soybean oil, and combinations of these oils. Therefore, preferably the vegetable oil is an edible oil. Microalgal oil is considered a vegetable oil in the context of this invention. Microalgal oil can provide an unpleasant taste, e.g. to a food product with a subtle and light taste as a mayonnaise-like product, and its concentration therefore should be low. In a composition of the invention, the amount of microalgal oil is below 1 wt%, preferably below 0.5 wt%, based on the weight of the food composition, most preferably microalgal oil is absent from the food composition.

## Water

The composition of the invention comprises water. The total amount of water is preferably of from 15 to 35%, more preferably of from 20 to 35 wt%, even more preferably of from 25 to 30 wt%, based on the weight of the composition. Any combination of ranges using these mentioned end points are considered to be part of the invention as well.

## Emulsifier

The composition of the invention comprises an oil-in-water emulsifier. The emulsifier serves to disperse oil droplets in the continuous aqueous phase of an oil-in-water emulsion and prevents them from coalescing. According to the invention, the composition therefore comprises microalgal protein. The microalgal protein is preferably water-soluble. It appeared, that microalgae protein, at the high oil levels of the present invention, could be used as the only emulsifier in the composition. Accordingly, it is preferred, that the composition of the invention does not comprise another emulsifier than microalgae protein. Preferably, the composition of the invention does not comprise emulsifier from plant origin or animal origin in addition to the microalgae protein emulsifier. Preferably, the composition does not comprise plant protein. The composition is free from pulse protein, the composition is free from soy protein, pea protein, lentil protein, lupine protein chickpea protein. The composition is free from pea protein and soy protein. Soy protein may not be desired for example for allergy reasons, and the composition is free from soy protein. Although plant protein is preferably absent, since it is preferred that microalgae protein is the only emulsifier, mustard protein may still be present in this preferred situation, as a consequence of mustard being present for reasons of taste. The composition is free from non-mustard plant protein.

The composition of the invention is preferably free from emulsifiers that are perceived as not-natural by the consumer. Accordingly, the composition is preferably free from any one of monoglycerides, ethoxylated monoglyceride, polyoxy-ethylene sorbitans, mono- and diesters of higher fatty acids and glycerin. The composition of the invention is free from any one of monoglycerides, ethoxylated monoglyceride, polyoxy-ethylene sorbitans, mono- and diesters of higher fatty acids and glycerin, derived from non-microalgae origin.

Preferably, the composition comprises microalgal protein, wherein the microalgal protein is protein derived from an organism selected from the group consisting of *Chlorella, Arthrospira, Dunaliella, Tetraselmis, Chlamydomonas, Nannochloropsis,* and mixtures thereof. Preferably, the microalgal protein is derived from the species *Chlorella,* more preferably from *Chlorella vulgaris.* Microalgae can be commercially procured from *e.g.* Allmicroalgae, Portugal.

The microalgal protein, preferably water-soluble microalgal protein, is present in an amount of from 0.01 to 2 wt%, more preferably of from 0.05 to 1.5 wt%, even more preferably of from 0.1 to 1 wt%, even more preferably of from 0.1 to 0.5 wt%, based on the weight of the composition. This is calculated as dry weight of protein on wet weight of composition. It is preferred, that the weight ratio of microalgal protein to vegetable oil is from 0.0001 to 0.05, preferably of from 0.001 to 0.02. This is calculated as dry wt. of protein on weight of the oil. The preferred ratio results in optimal effect in terms of providing a stable emulsion, an homogenous texture and stable viscosity upon storage.

Microalgal protein is known to the person skilled in the art. As the skilled person will understand, the microalgal protein is available in the composition of the invention, carrying out its emulsifying properties. The microalgae protein is preferably present at the oil-water interface. Accordingly, the microalgal protein is not present in the form of intact microalgal cells. It may be preferred, that the microalgal protein is isolated microalgal protein. This means isolated from the microalgae cells. Especially in the latter case, the composition is preferably free from microalgae intact cells. The microalgae protein preferably is microalgae protein isolate. In the latter case, the use of microalgal protein not only provides a stable emulsion, with a stable texture during storage and with a smooth, homogenous, and glossy appearance, but also an emulsion could be achieved wherein the appearance of the emulsion is white and free of green colour. For example, when homogenised green *Chlorella vulgaris* is used, without protein isolation, the resulting food composition has a green color. It is preferred that the composition of the invention does not comprise chlorophyll, more preferably does not comprise chlorophyll or micro-algae beta-carotene.

## Acid and pH

The composition of the invention has a pH ranging from 2 to 4.8, preferably ranging from 2.5 to 4.5.

The total amount of acid in the composition can be determined by titration with sodium hydroxide (NaOH), and expressed as titratable acidity. This is called the titratable acidity, expressed as acetic acid (HAc), which is determined using the following formula.

$$HAc\% = 100\% \cdot (V \cdot t \cdot M)/m \qquad (1)$$

wherein:

V: volume NaOH solution added (mL)
t: concentration NaOH solution (mol/L)
M: molecular weight HAc (60.052 g/mol)
m: mass (g) product which has been titrated

The composition preferably comprises an acid. Preferably the composition comprises organic acid. More preferably, the acid is organic acid. Preferably, the organic acid comprises an acid selected from the group consisting of acetic acid, citric acid, lactic acid, salts thereof and mixtures thereof. Preferably the acid is selected from the group consisting of acetic acid, citric acid, lactic acid, salts thereof and mixtures thereof. It is more preferred that the composition comprises acetic acid and salts thereof. Preferably the composition of the invention has a total titratable acidity ranging from 0.03% to 3% by weight expressed as acetic acid, preferably from 0.05% to 2% by weight, preferably from 0.1% to 1% by weight. Most preferably the composition comprises acetic acid. Acetic acid is preferably present in an amount of more than 50 wt%, more preferably more than 80 wt%, even more preferably more than 90 wt%, even more preferably more than 95 wt% based on the weight of the total amount of acid in the composition.

The acids as described in this specification include their corresponding salts which are in equilibrium with the acids (acetates, citrates, lactates, etc.). In case a concentration of an acid is provided, then this concentration refers to total concentration of the acid and its corresponding salt. Acid is preferably added during preparation of the food composition in the form of vinegar or lemon juice. The compositions preferably comprises vinegar or lemon juice.

Other ingredients

The composition of the invention may contain additionally other ingredients than already specifically mentioned in here. It may be preferred that the composition contains plant material in the form of herbs and/or spices. In case such ingredients are present in the composition, then generally their total concentration is preferably at least 0.1% by weight, and preferably maximally 10% by weight, preferably maximally 5% by weight.

The composition of the invention may comprise sugar, but high levels are not desired. Sugar may be present to an amount of from 0.1 to 15 wt%, preferably of from 0.3 to 6 wt%, even more preferably of from 0.4 to 5 wt%, most preferably of from 0.5 to 4 wt%, based on the weight of the composition. Mustard may be present for taste reasons, it is not an emulsifier in the context of this invention and excluded from calculations in this respect.

Total alkaline metal salt, for example sodium chloride, may be present to an extent of from 0.1 to 5 wt%, preferably from 0.15 to 4 wt%, or more preferably of from 0.2 to 3 wt%, based on the weight of the composition.

Oil- in-water emulsions often comprise thickeners. In the present invention it was found that thickeners are not needed to provide a desired viscosity which is recognised by the consumer as resembling that of a full fat mayonnaise. Accordingly, the food composition is preferably free from non-microalgae hydrocolloids. One non-microalgae hydrocolloid can be present, such as starch, but it is preferred that the composition is free from non-algae hydrocolloid.

Accordingly, starch is preferably present in an amount of below 1%, more preferably below 0.6% even more preferably below 0.4%, most preferably no starch is present, based on the weight of the food composition. The food composition of the invention is preferably free from starch or gum or both. The composition is preferably free form gum, such as for example xanthan gum. The composition is preferably free from microalgae hydrocolloid, such as micro algae-derived gum.

With the use of microalgal protein a viscosity, a hardness, of the composition (as expressed in Stevens value, in grams) was reached that appeared to stay stable upon storage of at least a month, preferably at least 2, 4 or even 6 months, e.g. 1 to 24 months, preferably 2 to 12 months, more preferably 2 to 8 months. The Stevens Value (in grams) is preferably of between 50g and 300g, preferably between 80g and 200g, as measured at 20 °C. The hardness (Stevens Value) is preferably in the same order of magnitude as observed for an equivalent composition wherein egg yolk is used as emulsifier.

Preferably, the rheological properties defining the texture, expressed in elastic modulus G' (in Pa), also remains stable over time. The G' is preferably of between 500 and 4000 Pa, preferably between 800 and 3000 Pa, as measured at 20 °C.

In addition, with the use of the microalgal proteins an eggless oil-in-water emulsified food composition could be obtained that showed a smooth appearance (not like cottage cheese), and had a gloss resembling yolk-containing mayonnaise.

The oil droplet size D3.2 is preferably from 0.2 to 75 micrometers, more preferably of between 1 and 50 μm, even more preferably of between 1 and 30 microns and most preferably of between 1 and 10 microns, see M. Alderliesten, Particle & Particle Systems Characterization 8 (1991) 237-241; for definitions of average diameters).This oil droplet size reflects the size as obtained by industrial mayonnaise production.

The composition of the invention is free from egg-derived ingredients. It may be preferred, that the composition is free from animal-derived ingredients, the composition may preferably be free from milk protein such as e.g. whey or casein. This makes the composition in particular of interest for vegetarian or vegan consumers.

A preferred composition according to the invention is a food composition in the form of an oil-in water emulsion, comprising:

- From 66 to 87 wt% of vegetable oil, based on the weight of the composition, wherein the composition comprises less than 1 wt% of microalgal oil, based on the weight of the composition,
- Water,
- From 0.1 to 2 wt% of microalgal protein, wherein the microalgal protein is water dissolvable at water of 20 °C and is derived from *Chlorella,*

wherein the composition has a pH of from 2.5 to 4.8,
wherein the composition is free from egg-derived ingredients, wherein the composition is free from any one of monoglycerides, ethoxylated monoglyceride, polyoxy-ethylene sorbitans, mono- and diesters of higher fatty acids and glycerin, derived from non-microalgae origin and wherein the composition is free from non-mustard plant protein.

Method for preparation of composition

In a second aspect the present invention provides a method for making an emulsified food composition according to the first aspect of the invention. Preferred compounds and amounts indicated in the first aspect of the invention apply for this aspect as well. The method comprises the steps of:

a. Providing a water phase comprising water,
b. Providing an oil phase,
c. Mixing the water phase and the oil phase to provide an oil-in-water emulsion,
d. Adding microalgal protein during step a), b) or c),

to provide an oil-in-water emulsion with a pH of from 2.5 to 4.8.

The method of the invention comprises homogenisation of a mixture of oil and water. This results in an oil-in-water emulsion. Technology to prepare oil-in-water emulsions is known in the art, e.g. for mayonnaise making. Preferably, water and water-soluble ingredients are provided in step a). As the skilled person understands, preferably acid is present in the composition. It is preferably added, as the skilled person will appreciate, in an amount to provide a pH in the final composition of between 2 and 4.8, more preferably of between 2.5 and 4.5. The acid can be added for example during either of steps a) or c), but is preferably added during or after step c), more preferably after step c). Such acidification post-emulsifying, and when algae protein is already present in the composition, provided optimal emulsification, e.g. when compared to the situation that acid is present in the water phase from the start of the preparation procedure.

In step a, b, or c) the microalgal protein is added. The protein is preferably a powder, a paste or a homogenate, preferably the microalgal protein is added in the form of a powder. The microalgal protein can preferably be added in the form of a protein isolate comprising
microalgal protein or in the form of microalgal biomass, most preferably in the form of a protein isolate. It is preferably not added in the form of intact microalgal cells. Indeed, the composition preferably contains less than 0.5 wt% of intact microalgae cells more preferably the composition is free from intact microalgae cells.

In step b), an oil phase is provided. The oil phase comprises vegetable oil. The amount of oil that is added is the amounts as indicated above in the context of the product description. In step c), the oil phase, as provided in step b), and the water phase as provided in step a) are mixed to provide an oil-in-water-emulsion. Mixing is suitably carried out with a shear mixing device as known in the art such as a colloid mill, rotor-stator homogenizer, or Silverson mixing apparatus. Preferably, by using such method, an oil-in-water emulsion is prepared, wherein the oil droplets have a surface weighted mean diameter D3,2 of from 0.2 to 75 microns, more preferably of between 1 and 50 μm, even more preferably of between 1 and 30 microns and most preferably of between 1 and 10 microns (see M. Alderliesten, Particle & Particle Systems Characterization 8 (1991) 237-241; for definitions of average diameters).

The composition is preferably ambient stable, e.g. in terms that microorganisms will not grow when the product is at 20 °C. This provided for by the low pH of the composition. Therefore, the composition of the invention is preferably not heated, e.g. for pasteurisation or sterilisation purposes, e.g. above a temperature of 50 °C.

The invention further relates to a product obtainable by, preferably obtained by a process according to the method of the invention. The resulting product preferably is a food composition in the form of an oil-in-water emulsion, comprising:

- From 66 to 87 wt% of vegetable oil, based on the weight of the composition, wherein the composition comprises less than 1 wt% of microalgal oil, based on the weight of the composition,
- Water,
- microalgal protein, preferably in an amount of from 0.01 to 2 wt%,

wherein the composition has a pH of from 2.5 to 4.8,

wherein the composition is free from egg-derived ingredients.

Use

In a further aspect, the present invention relates to the use of microalgal protein in an oil-in-water emulsified food composition comprising 66 to 87 wt% of vegetable oil and which is free from egg-derived emulsifier and has a pH of from 2 to 4.8, and which is free from any one of monoglycerides, ethoxylated monoglyceride, polyoxy-ethylene sorbitans, mono- and diesters of higher fatty acids and glycerin, derived from non-microalgae origin, to provide an emulsion wherein the viscosity remains constant upon storage for at least 1 month, preferably 2 months. When microalgal protein is used as described above in the context of the product of the invention, the undesired hardening after production, is prevented.

In a further aspect, the present invention relates to the use of microalgal protein in a oil-in-water emulsified food composition comprising 66 to 87 wt% of vegetable oil and which is free from egg-derived emulsifier and has a pH of from 2 to 4.8, and which is free from any one of monoglycerides, ethoxylated monoglyceride, polyoxy-ethylene sorbitans, mono- and diesters of higher fatty acids and glycerin, derived from non-microalgae origin, to provide a homogenous texture to the food composition.

In a further aspect, the present invention relates to the use of microalgal protein in an oil-in-water emulsified food composition comprising 66 to 87 wt% of vegetable oil and which is free from egg-derived emulsifier and has a pH of from 2 to 4.8, and which is free from any one of monoglycerides, ethoxylated monoglyceride, polyoxy-ethylene sorbitans, mono- and diesters of higher fatty acids and glycerin, derived from non-microalgae origin, to provide gloss to the composition, preferably similar to that of an equivalent composition wherein egg-derived emulsifier is used.

The invention is now exemplified by the following, non-limiting examples.

**Examples**

Preparation of water-soluble microalgal protein extract:

The microalgae *Chlorella vulgaris* was cultured in an outdoor photobioreactor at Wageningen WUR and the *Nannochloropsis gaditana* was cultured in an outdoor photobioreactor system at FITOPLANCTON MARINO, S.L. at Cadiz, Spain and then harvested. The microalgae were dispersed in tap water and bead-milled until all cells were broken and then concentrated to about 6.5 wt% Biomass (pH between 6.5-7) and the suspension was centrifuged for 30 min 9000 rpm (16000g) at 5 degrees Celsius. The supernatant was collected, and the pellet was washed again by adding water to the pellet at ratio 1:1 pellet: water, then mixed manually, stirred 15 min and again centrifuged for 30 min 9000 rpm (16000g) at 5 degrees Celsius. The supernatant was collected and added to the first supernatant fraction and both were freeze dried to a powder using a freeze dryer. The freeze-dried powder was used as the water-soluble microalgal protein fraction.

Preparation of Dressing sample

Dressings with microalgal protein were prepared with either the water-soluble fraction from microalgae as prepared above or freeze-dried powder of the microalgal biomass. The type and amount of the fraction from microalgae used to make 1kg of a 70% w/w dressing with the ingredients is given in Table 1. The dosis of protein used was based on the effectiveness of the protein as emulsifier to provide an emulsion with a Stevens Value between 90 -120 g as in comparative example of Hellmann’s Real mayonnaise containing egg yolk with 70% oil, commercial product (Unilever),

(in example 3 a lower Stevens value was reached). The microalgae protein extract was added to the water phase in amounts as given in Table 1. Only in Example 1A, the microalgal protein was dispersed in water and preheated 5 minutes at 80 °C and then cooled down. In example 1B, 2 and 3 the microalgal fractions were dispersed in water but not heated. Then the total water phase was prepared by combining the water phase components to water. Then slowly 700g oil was added to the water phase containing algae protein extract while mixing at low shear using a Silverson benchtop mixer at 3000 rpm for 3 min using an emulsion screen. When all oil was added a high shear treatment of 3 min at 7000 rpm was used using the Silverson and an emulsion screen. Then vinegar spirit and lemon juice were added for post- acidification (to pH 3.8- 4) and this was mixed under low shear for 1 min at 1000 rpm followed by a post shear treatment of 2 min at 7000 rpm.

For the comparative sample A, a 200 ml 8 % w/w yellow pea protein (YPP, Roquette, containing 83% protein) dispersion was prepared in tap water (pH 7.3, no pH adjustment), stirred using a magnetic stirrer and placed in a water bath of 95°C until the sample reached a temperature of between 90-95°C, and maintained at this temperature for 5 minutes, then the sample was cooled to room temperature. The dressing of the comparative sample was made according to the above method using the ingredients as given in Table 1. For comparative sample B, a 200 ml 8 % w/w potato protein (Solanic 300, from Avebe, containing 98% protein) dispersion was prepared in tap water (pH 3.5). The dispersion was not heated but used when the protein was dispersed homogeneously. The dressing of the comparative sample was made according to the above method using the ingredients as given in Table 1.

Table 1. Ingredients for dressings using micro algae of *Chlorella Vulgaris* or *Nannochloropsis gaditana* in the end-product.

| **Formulation:** | **Example 1A** | **Example 1B** | **Example 2** | **Example 3** | **Comp. example A** | **Comp. example B** |
|---|---|---|---|---|---|---|
| | 1000 g | 1000 g | 1000 g | 1000 g | 1000 g | 1000 g |
| **Ingredients** | grams | grams | grams | grams | grams | grams |
| Waterphase components: | | | | | | |
| TAP WATER | 158.75 | 158.75 | 128.75 | 158.75 | 128.75 | 128.75 |
| EDTA (EDTA-CaNa2.2H2O) | 0.07 | 0.07 | 0.07 | 0.07 | 0.07 | 0.07 |
| NaCl Non Iodized | 22 | 22 | 22 | 22 | 22 | 22 |
| Sugar Crystal white | 27.3 | 27.3 | 27.3 | 27.3 | 27.3 | 27.3 |
| Example 1A: Microalgal water-soluble protein, preheated in waterphase 5' @80 °C, from *Chlorella vulgaris.* (1.2 % w/w protein in water) | 100 | 0 | 0 | 0 | 0 | 0 |
| Example 1B: Microalgal water-soluble protein from *Chlorella vulgaris* (1.2 % w/w protein in water) | 0 | 100 | 0 | 0 | 0 | 0 |
| Example 2: Microalgal water-soluble protein from *Nannochloropsis gaditana* (3.6 % w/w protein in water) | 0 | 0 | 100 | | 0 | 0 |
| Example 3: Microalgal biomass from *Chlorella vulgaris* (8% w/w protein in water) | 0 | 0 | | 100 | 0 | 0 |
| | | | | | | |
| Comparative sample X: YPP (7 % w/w in water) | 0 | 0 | 0 | 0 | 100 | 0 |
| Comparative sample Y: Potato protein isolate Solanic 300 (8 % w/w in water) | 0 | 0 | 0 | 0 | 0 | 100 |
| Oil phase: | 700 | 700 | 700 | 700 | 700 | 700 |

(continued)

| **Formulation:** | **Example 1A** | **Example 1B** | **Example 2** | **Example 3** | **Comp. example A** | **Comp. example B** |
|---|---|---|---|---|---|---|
| | 1000 g | 1000 g | 1000 g | 1000 g | 1000 g | 1000 g |
| **Ingredients** | grams | grams | grams | grams | grams | grams |
| Waterphase components: | | | | | | |
| Soybean oil | | | | | | |
| Post adding ingredients: Vinegar spirit 12% v/v | 19.5 | 19.5 | 19.5 | 19.5 | 19.5 | 19.5 |
| Lemon Juice Concentrate 45 Brix | 1.48 | 19.5 | 1.48 | 1.48 | 1.48 | 1.48 |

Results viscosity stability

The viscosity as expressed by the Stevens Value of all the microalgae-containing dressings was stable up to at least two months (last measuring point). The microalgae-containing dressings showed good viscosity-stability of the emulsion during storage In contrast to this, the comparative samples using 0.7% YPP or 0.8 % Solanic 300 (potato protein isolate) showed that during storage the viscosity (hardness) increased already after 1 week (so-called post hardening), as reflected in their Stevens Values, and reached an increase in viscosity of 11% and 53% respectively, after only two weeks of storage.

Table 2 Stevens values of dressing products of Examples 1, 2 and 3 and their comparative examples:

| | Stevens Values (g) | | | G' (Pa) | |
|---|---|---|---|---|---|
| | After 24 h storage | After 1 week | After 2 weeks | After 24 h | after 1 weeks |
| **Comparative Example** A with 0.7% YPP | 165 | 170 | 183# | 1195 | 1902# |
| **Comparative Example** B with 0.8 % Solanic 300 potato protein (not heated) | 126 | 172 | 194 | 4760 | 5755 |
| **Example 1a** with 0.12% w/w Microalgal protein from *Chlorella vulgaris.* preheated water phase 5' 80 °C | 115 | 113 | 115 | 3280 | 3255 |
| **Example 1** b with 0.12% w/w microalgal protein from *Chlorella vulgaris* | 91 | 94 | 92 | 2400 | 2398 |
| **Example 2** with 0.36% w/w Microalgal protein from *Nannochloropsis* | 132 | 131 | 132 | 991 | 1056 |
| **Example 3** with 0.8 % w/w protein from Microalgal biomass from *Chlorella vulgaris* | 56 | 56 | 56 | 835 | 842 |
| **Comparative example:** Hellmann's Real (70% oil) | 120 | 120 | 120 | 550 | 550 |
| # 4 weeks stored | | | | | |

Results appearance

The texture appearance of the dressing samples was tested visually on 'curdledness' (roughness of the surface) by a panel of 10 persons on score between 1 and 5, of which 1=not rough (very smooth) and 5 is very rough, 'curdled-like' appearance. (as e.g. cottage cheese). The mean scores from a panel of 10 persons are listed below:

Table 3: Mean scores between 1 and 5 on the 'curdledness' of dressing samples from a panel of 10 persons.

| Example | Comparative example, Hellmann's Real | Comparative example A (with pea protein) | Comparative example B (with potato protein) | Example 1a | Example 1b | Example 3 |
|---|---|---|---|---|---|---|
| Average score | 1 | 5 | 3 | 1 | 2 | 2 |

It was concluded the texture appearance of the dressing samples containing microalgal protein was not rough and smoother than comparative samples A with pea protein- or potato protein-stabilized dressing and more close to egg yolk containing dressing (comparative example Hellmann's Real). In addition, all algae protein-containing examples had a gloss, similar to Hellman's' egg-containing mayonnaise, whereas the comparative examples A and B showed less gloss than the Hellman's comparative.

Example 4 and 5: Dressing with water soluble protein of *Chlorella v.* green using preacidification as processing step

Dressings with microalgal protein from *Chlorella vulgaris* were made using the water-soluble algae protein fraction as prepared above. The microalgal protein was added to the water phase in amounts as given in Table 4.

In example 4, the water phase was heated to 85 °C for 5 minutes and then cooled down to 4 °C. For example 5, the microalgal protein fraction in water was not heated. Then the total water phase was prepared by combining all water phase components to water (salt and sugar and then vinegar and lemon juice). Then slowly 140 g oil was added to the water phase containing algae protein extract while mixing at low shear using a Silverson benchtop mixer at 3000 rpm for 3 min. When all oil was added a high shear treatment of 3 min at 7000 rpm was used using the Silverson and an emulsion screen.

Table 4: Ingredients of dressing examples 4 and 5 and their Stevens Values and G' after 1 day of preparation and after 2 weeks storage at 4°C.

| Example No. | | 4 | 5 |
|---|---|---|---|
| Chlorella fraction: | | heated | not heated |
| ingredients: | % | gram | gram |
| Vinegar spirit 12% | 2 | 4 | 4 |
| Lemon Juice | 0.148 | 0.296 | 0.296 |
| Soy bean oil | 70 | 140 | 140 |
| Microalgal protein extract | 23.8 | 5.00 | 5.00 |
| demineralised water | | 40.80 | 40.80 |
| NaCl | 2.2 | 4.4 | 4.4 |
| Sugar | 2.73 | 5.46 | 5.46 |
| sum | 100.9 | 200.0 | 200.0 |
| | | | |
| % w/w microalgal protein in sample | | 0.12 | 0.12 |
| Plant extr. % | | 2.50 | 2.50 |
| pH | | 3.9 | 3.9 |
| Stevens Value (g) after 1 day | | 91 | 68 |
| Stevens Value (g) after 2 weeks | | 91 | 65 |
| G'(Pa) | | 2394 | 3304 |
| G'(Pa) after 2 weeks | | 2400 | 3166 |

Conclusion:

The conclusion from Examples 4 and 5 is that no post-hardening of dressing samples stabilized with algal protein was observed in both cases, preheated or not heated algae fractions.

Measurements:

Rheology

Rheological properties (dynamic moduli and viscosity) were measured using an AR2000ex rheometer (TA Instruments Ltd, UK). The rheometer was equipped with parallel plates (4 cm diameter) with roughened surfaces and a measurement gap of 1 mm. Dynamic moduli (G', G") and tan δ (= G"/G') were determined from oscillatory measurements performed at 1 Hz frequency; Strain was set at 0.01%, and temperature at 20°C. G' was recorded after 5 minutes. The measurement is carried out at 20 °C.

Stevens values

Firmness (or Hardness or Stevens value: SV) was determined using a Stevens Texture Analyser equipped with a typical mayonnaise grid, speed 1mm/s, depth 20 mm, at room temperature. The mayonnaise grid comprises square openings of approximately 3x3 mm, consisting of wire with a thickness of approximately 1mm, diameter of the circular grid is 37.4mm. The measurement is carried out at 20 °C.

## Claims

**1.** A food composition in the form of an oil-in-water emulsion, comprising:

- From 66 to 87 wt% of vegetable oil, based on the weight of the composition, wherein the composition comprises less than 1 wt% of microalgal oil, based on the weight of the composition,
- Water,
- From 0.01 to 2 wt% of microalgal protein,

wherein the composition has a pH of from 2.5 to 4.8,
wherein the composition is free from egg-derived ingredients
wherein the composition is free from animal-derived ingredients,
wherein the composition is free from any one of monoglycerides, ethoxylated monoglyceride, polyoxy-ethylene sorbitans, mono- and diesters of higher fatty acids and glycerin, derived from non-microalgae origin and wherein the composition is free from non-mustard plant protein.

**2.** Food composition according to any one of the preceding claims, wherein the microalgal protein is protein derived from an organism selected from the group consisting of *Chlorella, Arthrospira, Dunaliella, Tetraselmis, Chlamydomonas Nannochloropsis,* and mixtures thereof.

**3.** Food composition according to any one of the preceding claims, wherein the protein is derived from *Chlorella,* preferably from *Chlorella vulgaris.*

**4.** Food composition according to any one of the preceding claims, wherein the microalgal protein is soluble in water of pH 7 at 20 °C.

**5.** Food composition according to any one of the preceding claims, wherein the microalgal protein is present in an amount of from 0.05 to 1, preferably of from 0.1 to 1wt%, based on the weight of the composition.

**6.** Food composition according to any one of the preceding claims, wherein the ratio of water-soluble microalgal protein to oil is from 0.0001 to 0.05, preferably of from 0.001 to 0.02.

**7.** Food composition according to any one of the preceding claims, wherein the microalgae protein is a protein isolate.

**8.** Food composition according to any one of the preceding claims, wherein the composition is a mayonnaise composition with a viscosity expressed as elastic modulus G' of from 20 to 6000 Pa, preferably of from 300 to 4000 Pa at 20 °C.

**9.** Process to prepare a composition according to any one of the preceding claims, the process comprising the steps of:

a. Providing a water phase comprising water and add an acidulant during step a or d,
b. Providing an oil phase,
c. Mixing the water phase and the oil phase to provide a oil-in-water emulsion,
d. Adding microalgal protein during step a), b) or c),

to provide an oil-in-water emulsion with a pH of from 2.5 and 4.8.

**10.** Process according to claim 9, wherein acid is added during or after step c).

**11.** Use of microalgal protein in an oil-in-water emulsified food composition comprising 66 to 87 wt% of vegetable oil and which is free from egg-derived emulsifier and has a pH of from 2 to 4.8, and which is free from monoglycerides, ethoxylated monoglyceride, polyoxy-ethylene sorbitans, mono- and diesters of higher fatty acids and glycerin, derived from non-microalgae origin, to provide a homogenous texture to the food composition.

**12.** Use of microalgal protein in an oil-in-water emulsified food composition comprising 66 to 87 wt% of vegetable oil and which is free from egg-derived emulsifier and has a pH of from 2 to 4.8, and which is free from monoglycerides, ethoxylated monoglyceride, polyoxy-ethylene sorbitans, mono- and diesters of higher fatty acids and glycerin, derived from non-microalgae origin, to provide an emulsion wherein the viscosity remains constant upon storage for at least 1 month, preferably 2 months.

**13.** Use of microalgal protein in an oil-in-water emulsified food composition comprising 66 to 87 wt% of vegetable oil and which is free from egg-derived emulsifier and has a pH of from 2 to 4.8, and which is free from monoglycerides, ethoxylated monoglyceride, polyoxy-ethylene sorbitans, mono- and diesters of higher fatty acids and glycerin, derived from non-microalgae origin, to provide gloss to the food composition.

## Patentansprüche

**1.** Waschmittelzusammensetzung, umfassend:

(i) 2 bis 70 Gew.-% eines Tensids; und
(ii) 0,00001 bis 0,1 Gew.-% eines Nuancierfarbstoffs, der kovalent an mindestens eine Alkoxy-$CH=CH_2$- oder -$CH=CH_2$-verkappte Polyalkoxy-Gruppe gebunden ist.

**2.** Waschmittelzusammensetzung nach Anspruch 1, wobei der Nuancierfarbstoff weißem Textil einen blauen oder violetten Farbton verleiht.

**3.** Waschmittelzusammensetzung nach Anspruch 1 oder Anspruch 2, wobei der Nuancierfarbstoff kovalent an eine oder zwei Alkoxy-$CH=CH_2$- oder -$CH=CH_2$-ver-kappte Polyalkoxy-Gruppen und bevorzugter kovalent an eine Alkoxy-$CH=CH_2$- oder -$CH=CH_2$-verkappte Polyalkoxy-Gruppe gebunden ist.

**4.** Waschmittelzusammensetzung nach einem vorhergehenden Anspruch, wobei die mindestens eine Gruppe der folgenden Formel entspricht:

$$-([CH_2]_mO)_nCH=CH_2,$$

wobei n 1 bis 20 ist und wobei m 2 bis 4 ist und wobei m vorzugsweise 2 bis 3 und bevorzugter m 2 ist.

**5.** Waschmittelzusammensetzung nach Anspruch 4, wobei n 1 bis 10 und vorzugsweise 2 bis 5 ist.

**6.** Waschmittelzusammensetzung nach irgendeinem vorhergehenden Anspruch, wobei der Nuancierfarbstoff über ein Heteroatom an die Gruppe gebunden ist, wobei das Heteroatom vorzugsweise O oder N ist und bevorzugter das Heteroatom N ist.

**7.** Waschmittelzusammensetzung nach irgendeinem vorhergehenden Anspruch, wobei der Nuancierfarbstoff ein blauer Nicht-Leuko- oder ein violetter Nicht-Leuko-Nuancierfarbstoff ist.

8. Waschmittelzusammensetzung nach irgendeinem vorhergehenden Anspruch, wobei das Nuancierfarbstoff-Chromophor ein Monoazo oder Bisazo und vorzugsweise ein Monoazo ist.

9. Waschmittelzusammensetzung nach Anspruch 8, wobei der Bisazo-Farbstoff ein Nicht-Leuko-Nuancierfarbstoff der folgenden Struktur (IV) ist:

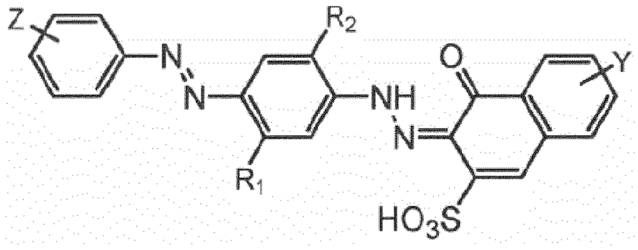

,

wobei:

$R_1$ und $R_2$, unabhängig voneinander, H, Alkyl, Alkoxy, Alkylenoxy, Alkyl-verkapptes Alkylenoxy, Polyalkylenoxy, Alkyl-verkapptes Polyalkylenoxy, Harnstoff, Amido oder Acetamido sind;
Z eine Sauerstoff-, Stickstoff- oder Sulfonamidogruppe ist, die ferner mit einer Alkoxy-$CH=CH_2$- oder -$CH=CH_2$-verkappten Polyalkoxy-Gruppe substituiert ist;
Y eine substituierte oder unsubstituierte Aminogruppe ist.

10. Waschmittelzusammensetzung nach Anspruch 8, wobei der Nicht-Leuko-Monoazofarbstoff die folgende Struktur (I) aufweist:

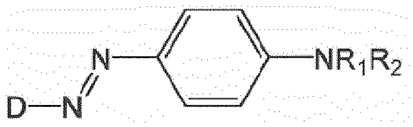

,

wobei D eine aromatische oder heteroaromatische Gruppe bedeutet und wobei mindestens einer von $R_1$ und $R_2$ eine Alkoxy-$CH=CH_2$- oder -$CH=CH_2$-verkappte Polyalkoxy-Gruppe darstellt und wobei vorzugsweise einer von $R_1$ und $R_2$ eine Alkoxy-$CH=CH_2$- oder -$CH=CH_2$-verkappte Polyalkoxy-Gruppe darstellt und der verbleibende eine von $R_1$ und $R_2$ -H, -Alkoxy oder -Polyalkoxy und bevorzugter - Ethoxy oder -Polyethoxy darstellt.

11. Häusliches Verfahren zur Behandlung eines Textils, wobei das Verfahren die Schritte umfasst:

a. Behandeln eines Textils mit einer wässrigen Lösung von 0,5 bis 20 g/l, bevorzugter 1 bis 10 g/l der Waschmittelzusammensetzung nach einem der vorhergehenden Ansprüche;
b. optional Spülen und Trocknen des Textils.

12. Blauer oder violetter abtönender Nicht-Leuko-Nuancierfarbstoff der folgenden Struktur (II):

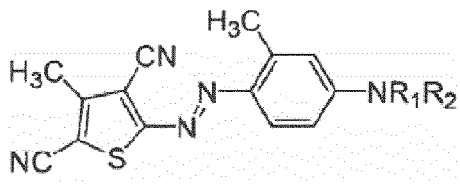

,

wobei mindestens einer von $R_1$ und $R_2$ eine Alkoxy-$CH=CH_2$- oder -$CH=CH_2$-verkappte Polyalkoxy-Gruppe darstellt, wobei vorzugsweise einer von $R_1$ und $R_2$ eine Alkoxy-$CH=CH_2$- oder -$CH=CH_2$-verkappte Polyalkoxy-Gruppe darstellt und der verbleibende eine von $R_1$ und $R_2$ -H, -Alkoxy oder -Polyalkoxy, bevorzugter - Ethoxy oder -Polyethoxy darstellt.

**13.** Blauer oder violetter abtönender Nicht-Leuko-Nuancierfarbstoff nach Anspruch 12, wobei der Nuancierfarbstoff die folgende Struktur (III) aufweist:

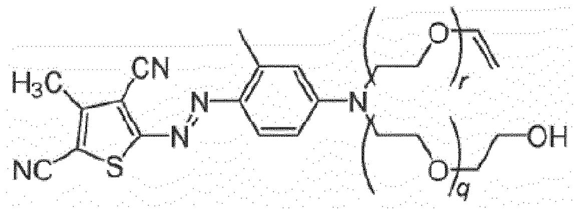

,

wobei r + q 1 bis 10 beträgt, vorzugsweise 2 bis 5 und noch bevorzugter r = 1 und q = 1 ist und wobei r mindestens 1 ist.

## Revendications

**1.** Composition de détergent de lessive comprenant :

(i) de 2 à 70 % en masse d'un tensioactif ; et
(ii) de 0,00001 à 0,1 % en masse de colorant d'ombrage qui est lié de manière covalente à au moins un groupe polyalcoxy coiffé par un alcoxy-$CH=CH_2$ ou -$CH=CH_2$.

**2.** Composition de détergent de lessive selon la revendication 1, dans laquelle le colorant d'ombrage fournit un ombrage bleu ou violet à du textile blanc.

**3.** Composition de détergent de lessive selon la revendication 1 ou revendication 2, dans laquelle le colorant d'ombrage est lié de manière covalente à un ou deux groupes polyalcoxy alcoxy-$CH=CH_2$ ou -$CH=CH_2$ coiffés et encore mieux est lié de manière covalente à un groupe polyalcoxy coiffé par un alcoxy-$CH=CH_2$ ou -$CH=CH_2$.

**4.** Composition de détergent de lessive selon l'une quelconque des revendications précédentes, dans laquelle le au moins un groupe est selon la formule suivante :

$$-([CH_2]_mO)_nCH=CH_2,$$

dans laquelle n est de 1 à 20 et dans laquelle m est de 2 à 4, et dans laquelle m est de préférence de 2 à 3 et encore mieux dans laquelle m est égal à 2.

**5.** Composition de détergent de lessive selon la revendication 4, dans laquelle n est de 1 à 10 et de préférence est de 2 à 5.

**6.** Composition de détergent de lessive selon l'une quelconque des revendications précédentes, dans laquelle le colorant d'ombrage est lié au groupe via un hétéroatome, de préférence dans laquelle l'hétéroatome est O ou N et encore mieux dans laquelle l'hétéroatome est N.

**7.** Composition de détergent de lessive selon l'une quelconque des revendications précédentes, dans laquelle le colorant d'ombrage est un colorant d'ombrage bleu non-leuco ou violet non-leuco.

**8.** Composition de détergent de lessive selon l'une quelconque des revendications précédentes, dans laquelle le chromophore de colorant d'ombrage est un mono-azo ou bis-azo et est de préférence un mono-azo.

**9.** Composition de détergent de lessive selon la revendication 8, dans laquelle le colorant bis-azo est un colorant d'ombrage non-leuco de la structure (IV) suivante :

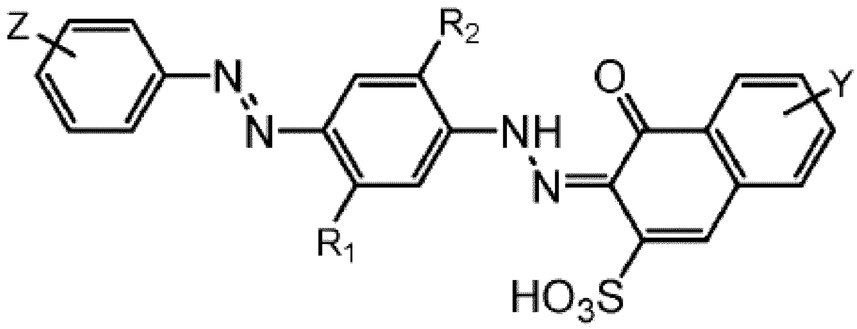

dans laquelle :

$R_1$ et $R_2$ sont indépendamment H, un groupe alkyle, alcoxy, alkylèneoxy, alkylèneoxy alkyle coiffé, polyalkylèneoxy, polyalkylèneoxy alkyle coiffé, urée, amido ou acétamido ;
Z est un oxygène, azote ou groupe sulfonamido de plus substitué avec un groupe polyalcoxy coiffé par un alcoxy-$CH=CH_2$ ou $-CH=CH_2$ ;
Y est un groupe amino substitué ou non substitué.

**10.** Composition de détergent de lessive selon la revendication 8, dans laquelle le colorant mono-azo non-leuco est de la structure (I) suivante :

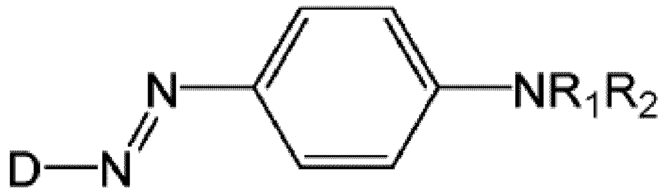

dans laquelle D indique un groupe aromatique ou hétéroaromatique ; et dans laquelle au moins un de $R_1$ et $R_2$ représente un groupe polyalcoxy coiffé par un alcoxy-$CH=CH_2$ ou $-CH=CH_2$ et de préférence dans laquelle un de $R_1$ et $R_2$ représente un groupe polyalcoxy coiffé par un alcoxy-$CH=CH_2$ ou $-CH=CH_2$ ; et le un de $R_1$ et $R_2$ restant représente -H, -alcoxy ou -polyalcoxy et représente encore mieux -éthoxy ou -polyéthoxy.

**11.** Procédé domestique de traitement d'un textile, le procédé comprenant les étapes de :

a. traitement d'un textile avec une solution aqueuse de 0,5 à 20 g/L, encore mieux de 1 à 10 g/L de la composition de détergent de lessive selon l'une quelconque des revendications précédentes ;
b. éventuellement rinçage et séchage du textile.

**12.** Formation d'ombrage par colorant d'ombrage non-leuco bleu ou violet de la structure (II) suivante :

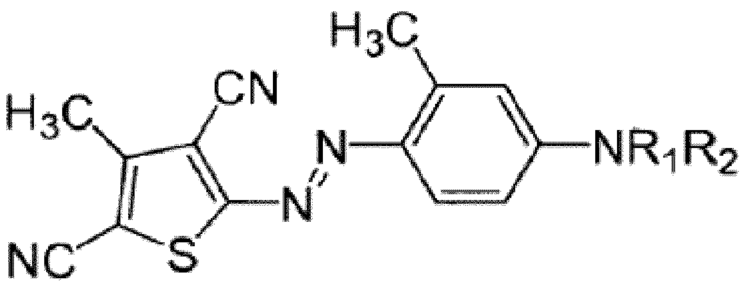

dans laquelle au moins un de $R_1$ et $R_2$ représente un groupe polyalcoxy coiffé par un alcoxy-$CH=CH_2$ ou $-CH=CH_2$, de préférence dans laquelle un de $R_1$ et $R_2$ représente un groupe polyalcoxy coiffé par un alcoxy-$CH=CH_2$ ou $-CH=CH_2$ ; et le un de $R_1$ et $R_2$ restant représente -H, -alcoxy ou -polyalcoxy, encore mieux -éthoxy ou -polyéthoxy.

**13.** Formation d'ombrage par un colorant d'ombrage non-leuco bleu ou violet selon la revendication 12, dans lequel le colorant d'ombrage est de la structure (III) suivante :

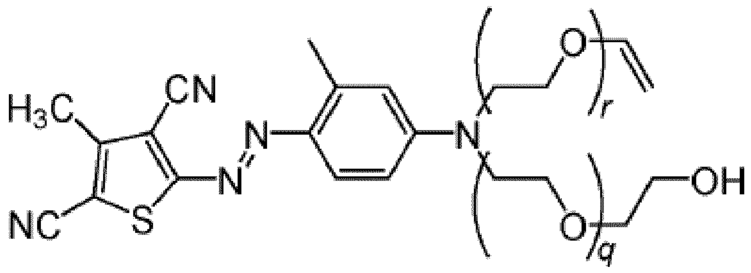

dans laquelle *r* + *q* est de 1 à 10, de préférence est de 2 à 5 et encore mieux *r* = 1 et *q*= 1 ; et dans laquelle *r* est au moins 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0788747 A


### Non-patent literature cited in the description


- **M. ALDERLIESTEN.** *Particle & Particle Systems Characterization,* 1991, vol. 8, 237-241